# EUROPEAN PATENT APPLICATION

(11) **EP 3 668 063 A1**
(43) Date of publication of application: **17.06.2020**
(21) Application number: 18907693.8
(22) Date of filing: 30.03.2018
(51) Int. Cl.: H04L 29/12

(54) **DOMAIN NAME RESOLUTION METHOD, SERVER AND SYSTEM**

(30) Priority: 28.02.2018 CN 201810167935
(71) Applicant: Wangsu Science & Technology Co., Ltd., Shanghai 200030 (CN)
(72) Inventor: CHEN, Danjiang, Shanghai 200030 (CN); LI, Zaibin, Shanghai 200030 (CN)
(74) Representative: EIP
(86) International application number: PCT/CN2018/081458
(87) International publication number: WO 2019/165665

(57) **Abstract**

The present disclosure provides a method, server and system for resolving a domain name for improving efficiency of domain name resolution, the method including: receiving, by a recursive DNS server, a resolution request sent by a terminal; determining, by the recursive DNS server, the IP address of the domain name to be resolved according to a pre-stored association relation; where the association relation is an association relation between a set of IP address segments, the domain name to be resolved, and the IP address of the domain name to be resolved; where the association relation is obtained by the recursive DNS server from an authoritative DNS server corresponding to the domain name to be resolved, and the set of IP address segments is a set of IP address segments to which the IP address of the terminal belongs in the authoritative DNS server; and generating, by the recursive DNS server, a resolution response including the IP address of the domain name to be resolved, and returning, by the recursive DNS server, the resolution response to the terminal, when the IP address of the domain name to be resolved exists in the recursive DNS server. Times for accessing the authoritative DNS server may be reduced by caching the association relation between the set of IP address segments, the domain name to be resolved and the IP address of the domain name to be resolved, thereby improving efficiency of domain name resolution.

## Description

### TECHNICAL FIELD

The present disclosure relates to network communication technologies, in particular, a method, server and system for resolving a domain name.

### BACKGROUND

A domain name system (DNS) is responsible for providing domain name resolution services for the Internet. The domain name system resolves a domain name into an Internet protocol (IP) address, so that an Internet user may access the corresponding domain name according to the IP address.

Edns-Client-Subnet (ECS) is a DNS extended protocol submitted by Google, which allows a recursive DNS server to transmit a user's IP address to an authoritative DNS server, and the authoritative DNS server that supports ECS may obtain the user's IP address and perform accurate scheduling according to the user's IP address. For example, domain names of some large websites may often be resolved into IP addresses that are throughout multiple regions, and each IP address corresponds to one application server (or application server cluster). The authoritative DNS server may select the application server that is close to the user according to the user's IP address and return the IP address of the application server to the user through the recursive DNS server. Due to that the application server assigned to the user by the authoritative DNS server is close to the user, the response speed of the application server to a user access message can be improved.

However, because the authoritative DNS server needs to perform scheduling according to the user's IP address, a domain name resolution manner using the ECS protocol takes more resources of the authoritative DNS server than a traditional domain name resolution manner, which is not advantageous for improving efficiency of domain name resolution.

### SUMMARY

Embodiments of the present disclosure provide a method, server and system for resolving a domain name to improve efficiency of domain name resolution.

In a first aspect, embodiments of the present disclosure provide a method for resolving a domain name, including:
receiving, by a recursive DNS server, a resolution request sent by a terminal; where the resolution request includes a domain name to be resolved and an Internet protocol IP address of the terminal;
determining, by the recursive DNS server, the IP address of the domain name to be resolved according to a pre-stored association relation; where the association relation is an association relation between a set of IP address segments, the domain name to be resolved, and the IP address of the domain name to be resolved; wherein the association relation is obtained by the recursive DNS server from an authoritative DNS server corresponding to the domain name to be resolved, and the set of IP address segments is a set of IP address segments to which the IP address of the terminal belongs in the authoritative DNS server; and
generating, by the recursive DNS server, a resolution response including the IP address of the domain name to be resolved, and returning, by the recursive DNS server, the resolution response to the terminal, when the IP address of the domain name to be resolved exists in the recursive DNS server.

The association relation stored in the recursive DNS server is an association relation between a set of IP address segments, the domain name to be resolved, and the IP address of the domain name to be resolved. The association relation is in the authoritative DNS server corresponding to the domain name to be resolved, and the set of IP address segments is a set of IP address segments to which the IP address of the terminal belongs in the authoritative DNS server. In the authoritative DNS server, IP addresses in the same set of IP address segments correspond to the same association relation. Therefore, the recursive DNS server may reduce times for accessing the authoritative DNS server by caching the association relation between the set of IP address segments, the domain name to be resolved and the IP address of the domain name to be resolved, thereby improving efficiency of domain name resolution.

Alternatively, the method further includes:
sending, by the recursive DNS server, a query request to the authoritative DNS server corresponding to the domain name to be resolved when the IP address of the domain name to be resolved does not exist in the recursive DNS server; where the query request includes the domain name to be resolved and the IP address of the terminal;
receiving, by the recursive DNS server, a query response sent by the authoritative DNS server, and the query response includes the IP address of the domain name to be resolved and the set of the IP address segments to which the IP address of the terminal belongs in the authoritative DNS server; and
generating, by the recursive DNS server, the resolution response including the IP address of the domain name to be resolved according to the query response, returning, by the recursive DNS server, the resolution response to the terminal, and storing, by the recursive DNS server, the association relation between the domain name to be resolved, the IP address of the domain name to be resolved and the set of the IP address segments.

The alternative method provides a method for the recursive DNS server to obtain the association relation in the authoritative DNS server. The recursive DNS server may obtain the association relation between the set of IP address segments to which the IP address of the terminal belongs, the domain name to be resolved, and the IP address of the domain name to be resolved. By adopting the alternative method, when the recursive DNS server receives a resolution request for a certain domain name to be resolved from a certain IP address in a certain set of IP address segments, the recursive DNS server may directly obtain the resolution result from the cache as long as the recursive DNS server used to respond to a resolution request for the domain name to be resolved from any IP address in the set of IP address segments, so that there is no need to access the authoritative server, thereby improving efficiency of resolution .

Alternatively, before the recursive DNS server determines the IP address of the domain name to be resolved according to the pre-stored association relation, further including:
determining, by the recursive DNS server, an identifier of the authoritative DNS server corresponding to the domain name to be resolved according to the domain name to be resolved; and
obtaining, by the recursive DNS server, the association relation according to the identifier of the authoritative DNS server.

The recursive DNS server usually caches association relations from a plurality of authoritative DNS servers, and resources of the association relations are distinguished through identifiers of the authoritative DNS servers. Since the IP address of the domain name to be resolved is assigned to the domain name to be resolved by the authoritative DNS server corresponding to the domain name to be resolved, the recursive DNS server first determines the identifier of the authoritative DNS server corresponding to the domain name to be resolved and then uses the identifier of the authoritative DNS server to determine the association relation from the authoritative DNS server when querying the cached association relation, thereby accelerating query efficiency of the recursive DNS server.

Alternatively, the recursive DNS server determines the IP address of the domain name to be resolved according to the pre-stored association relation, including:
determining, by the recursive DNS server, an IP address segment to which the IP address of the terminal belongs in the association relation; and
querying, by the recursive DNS server, the association relation according to the domain name to be resolved and the IP address segment, and determining, by the recursive DNS server, the IP address of the domain name to be resolved.

In a cache of the recursive DNS server, one IP address segment corresponds to a plurality of domain names and IP addresses of the domain names. Therefore, when determining an IP address of a domain name to be resolved, the IP address segment to which an IP address of a terminal belongs is determined first, and then the IP address of the domain name to be resolved is determined according to the domain name to be resolved in a plurality of domain names and IP addresses of the domain names corresponding to the IP address segment.

Alternatively, the IP address segments in the set of IP address segments are B-type IP address segments.

The B-type IP address segments may include a greater number of IP addresses, and the recursive DNS server caches by the B-type IP address segments, so that the memory space of the recursive DNS server occupied by the cached data may be reduced.

In a second aspect, embodiments of the present disclosure provide a method for resolving a domain name, including:
receiving, by an authoritative DNS server, a query request sent by a recursive DNS server; where the query request includes a domain name to be resolved and an IP address of a terminal;
determining, by the authoritative DNS server, the IP address of the domain name to be resolved according to the IP address of the terminal; and
generating, by the authoritative DNS server, a query response according to the IP address of the domain name to be resolved, and returning, by the authoritative DNS server, the query response to the recursive DNS server; where the query response includes the IP address of the domain name to be resolved and a set of IP address segments corresponding to the IP address of the terminal.

In a third aspect, embodiments of the present disclosure provide a recursive DNS server, including:
a transceiver unit, configured to receive a resolution request sent by a terminal; where the resolution request includes a domain name to be resolved and an IP address of the terminal; and
a processer unit, configured to determine the IP address of the domain name to be resolved according to a pre-stored association relation in a storage unit; where the association relation is an association relation between a set of IP address segments, the domain name to be resolved, and the IP address of the domain name to be resolved; where the association relation is obtained by the recursive DNS server from an authoritative DNS server corresponding to the domain name to be resolved, and the set of IP address segments is a set of IP address segments to which the IP address of the terminal belongs in the authoritative DNS server;
where the processer unit is further configured to generate a resolution response including the IP address of the domain name to be resolved, and return the resolution response to the terminal through the transceiver unit, when the IP address of the domain name to be resolved exists in the storage unit.

Alternatively, the processor unit is further configured to:
send a query request to the authoritative DNS server corresponding to the domain name to be resolved through the transceiver unit when the IP address of the domain name to be resolved does not exist in the storage unit; where the query request includes the domain name to be resolved and the IP address of the terminal.

The transceiver unit is further configured to:
receive a query response sent by the authoritative DNS server, where the query response includes the IP address of the domain name to be resolved and the set of the IP address segments to which the IP address of the terminal belongs in the authoritative DNS server.

The processor unit is further configured to:
generate the resolution response including the IP address of the domain name to be resolved according to the query response, return the resolution response to the terminal through the transceiver unit, and control the storage unit to store the association relation between the domain name to be resolved, the IP address of the domain name to be resolved and the set of the IP address segments.

Alternatively, the processor unit is further configured to:
determine an identifier of the authoritative DNS server corresponding to the domain name to be resolved according to the domain name to be resolved; and
obtain the association relation according to the identifier of the authoritative DNS server.

Alternatively, the processor unit is configured to:
determine an IP address segment to which the IP address of the terminal belongs in the association relation; and
query the association relation according to the domain name to be resolved and the IP address segment, and determine the IP address of the domain name to be resolved.

Alternatively, the IP address segments in the set of the IP address segments are B-type IP address segments.

In a fourth aspect, embodiments of the present disclosure provide an authoritative DNS server, including:
a transceiver unit, configured to receive a query request sent by a recursive DNS server; where the query request includes a domain name to be resolved and an IP address of a terminal;
a processor unit, configured to determine the IP address of the domain name to be resolved according to the IP address of the terminal; and
where the processor unit is further configured to generate a query response according to the IP address of the domain name to be resolved, and return the query response to the recursive DNS server through the transceiver unit; where the query response includes the IP address of the domain name to be resolved and a set of IP address segments corresponding to the IP address of the terminal.

In a fifth aspect, embodiments of the present disclosure provide a computer readable storage medium storing a computer executable instruction, where the computer executable instruction is configured to cause the computer to execute any one of the methods described above.

In a sixth aspect, embodiments of the present disclosure provide a computing device, including:
a memory, configured to store a program instruction; and
a processor, configured to call the program instruction stored in the memory to execute any one of the methods described above according to an program that is obtained.

In a seventh aspect, embodiments of the present disclosure provide a DNS system, including any one of the recursive DNS server described above, and/or any one of the authoritative DNS server described above.

In conclusion, the embodiments of the present disclosure provide a method, server and system for resolving a domain name, and the method includes: receiving, by a recursive DNS server, a resolution request sent by a terminal, where the resolution request includes a domain name to be resolved and an IP address of the terminal; determining, by the recursive DNS server, the IP address of the domain name to be resolved according to a pre-stored association relation; where the association relation is an association relation between a set of IP address segments, the domain name to be resolved, and the IP address of the domain name to be resolved; where the association relation is obtained by the recursive DNS server from an authoritative DNS server corresponding to the domain name to be resolved, and the set of IP address segments is a set of IP address segments to which the IP address of the terminal belongs in the authoritative DNS server; and generating, by the recursive DNS server, a resolution response including the IP address of the domain name to be resolved, and returning the resolution response to the terminal, when the IP address of the domain name to be resolved exists in the recursive DNS server. In the method for resolving the domain name provided in the embodiments of the present disclosure, the association relation stored in the recursive DNS server is an association relation between a set of IP address segments, the domain name to be resolved, and the IP address of the domain name to be resolved. The association relation is in the authoritative DNS server corresponding to the domain name to be resolved, and the set of IP address segments is a set of IP address segments to which the IP address of the terminal belongs. In the authoritative DNS server, IP addresses in the same set of IP address segments correspond to the same association relation. Therefore, the recursive DNS server may reduce times for accessing the authoritative DNS server by caching the association relation between the set of IP address segments, the domain name to be resolved and the IP address of the domain name to be resolved, thereby improving efficiency of domain name resolution.

### BRIEF DESCRIPTION OF THE DRAWINGS

In order to illustrate the technical solutions in the embodiments of the present disclosure more clearly, the drawings used in the description of the embodiments will be briefly described below. It is evident that the drawings in the following description are only some embodiments of the present disclosure. For those skilled in the art, other drawings may also be obtained according to these drawings without creative efforts.
FIG. 1 is a schematic architecture of a DNS system;
FIG. 2 is a schematic flowchart of a method for resolving a domain name provided in the embodiments of the present disclosure;
FIG. 3 is a schematic flowchart of a method for a feasible query interaction provided in the embodiments of the present disclosure;
FIG. 4 is a schematic structure of a recursive DNS server provided in the embodiments of the present disclosure;
FIG. 5 is a schematic structure of an authoritative DNS server provided in the embodiments of the present disclosure;
FIG. 6 is a schematic structure of a computing device provided in the embodiments of the present disclosure;
FIG. 7 is a schematic structure of a computer device provided in the embodiments of the present disclosure.

### DETAILED DESCRIPTION

In order to clarify the objectives, technical solutions and advantages of the present disclosure, the present disclosure will be further described in details with reference to the accompany drawings. It is evident that the embodiments described are only some, rather than all, embodiments of the present disclosure. Based on the embodiments of the present disclosure, all the other embodiments obtained by those skilled in the art without creative efforts shall fall into the protection scope of the present disclosure.

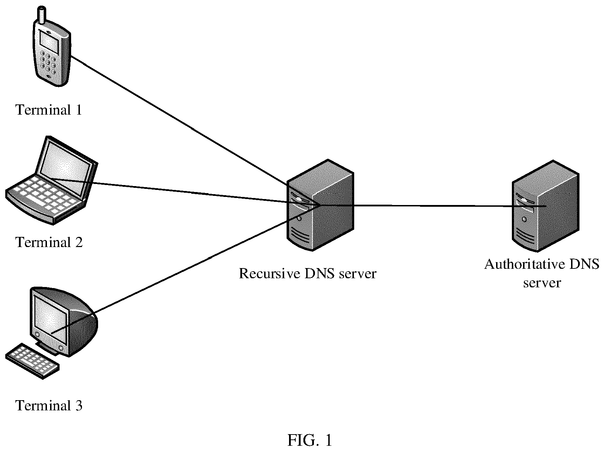

FIG. 1 is a schematic architecture of a DNS system. As shown in FIG. 1, the DNS system includes a DNS server and an authoritative server. Any of terminal 1, terminal 2 and terminal 3, when needing to access a domain name, has to resolve an IP address of the domain name through the DNS system. At this time, a terminal may send a domain name resolution request to a recursive DNS server first, and the domain name to be resolved is included in the domain name resolution request. Upon receiving the resolution request, the recursive DNS server may query a local cache first. If the local cache has the IP address of the domain name to be resolved, a resolution response carrying the IP address of the domain name to be resolved may be generated and returned to the terminal. And if the local cache of the recursive DNS server does not have the IP address of the domain name to be resolved, the recursive DNS server may send a query request to an authoritative DNS server, and the domain name to be resolved is carried in the query request. The authoritative DNS server is a server that assigns the IP address to the domain name to be resolved. The IP address of the domain name to be resolved may be determined according to the domain name to be resolved, after which a query response carrying the IP address of the domain name to be resolved may generated and returned to the recursive DNS server, and the recursive DNS server further generates the resolution response carrying the IP address of the domain name to be resolved and returns the resolution response to the terminal.

The recursive DNS server that supports the ECS protocol may carry the IP address of the terminal in an additional block of the query request when sending the query request to the authoritative DNS server. The authoritative DNS server may query a corresponding set of IP address segments according to the IP address of the terminal in the query request after receiving the query request, so as to perform a more accurate scheduling. IP addresses in the same set of IP address segments have the same attribute, for example, IP addresses are located in the same region, and for another example, IP addresses belong to the same operator, and so on. A particular attribute type may be determined according to the practical application situation and is not limited in the embodiments of the present disclosure. The authoritative DNS server may assign a same corresponding relation between the domain name and the IP address of the domain name for IP addresses in the same set of IP address segments. For example, in the authoritative DNS server, for a set 1 of IP address segments, the domain name A may be resolved as IPal, while for a set 2 of IP address segments, the domain name A may be resolved as IPa2.

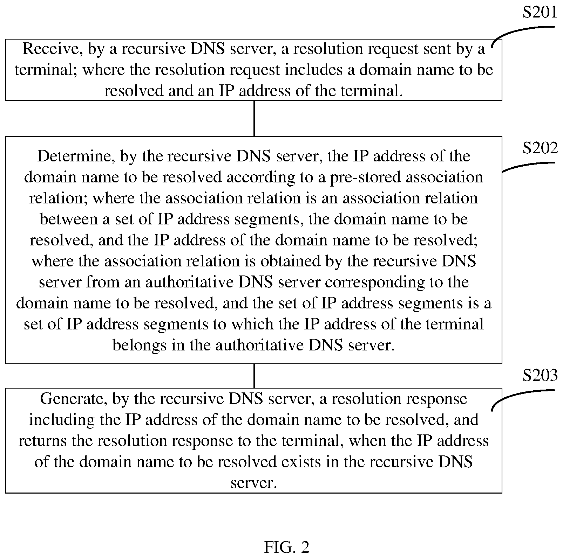

Based on the DNS system shown in FIG. 1, embodiments of the present disclosure provide a method for resolving a domain name. FIG. 2 is a schematic flowchart of the method for the domain name provided in the embodiments of the present disclosure. As shown in FIG. 2, the method includes the following steps.

In step 201, a recursive DNS server receives a resolution request sent by a terminal; where the resolution request includes a domain name to be resolved and an IP address of the terminal.

In step 202, the recursive DNS server determines the IP address of the domain name to be resolved according to a pre-stored association relation; where the association relation is an association relation between a set of IP address segments, the domain name to be resolved, and the IP address of the domain name to be resolved; where the association relation is obtained by the recursive DNS server from an authoritative DNS server corresponding to the domain name to be resolved, and the set of IP address segments is a set of IP address segments to which the IP address of the terminal belongs in the authoritative DNS server.

In step 203, the recursive DNS server generates a resolution response including the IP address of the domain name to be resolved, and returns the resolution response to the terminal, when the IP address of the domain name to be resolved exists in the recursive DNS server.

In a specific implementing process of step 201, the recursive DNS server is a server that supports the ECS protocol. Therefore, an additional block of the resolution request sent by the terminal to the recursive DNS server may carry the IP address of the terminal. For example, the IP address of the terminal 1 in FIG. 1 is (1.1.1.1), and the terminal 1 needs to access www.wangsu.com, then the resolution request received by the recursive DNS server from the terminal 1 may include the resolution domain name www.wangsu.com and the IP address (1.1.1.1) of the terminal 1.

In a specific implementing process of step 202, the recursive DNS server may store a historical resolution result. In the embodiments of the present disclosure, what the recursive DNS server stores is an association relation between the set of IP address segments, the domain name to be resolved, and the IP address of the domain name to be resolved. The association relation is obtained from the authoritative DNS server, and the set of IP address segments is a set of IP address segments to which the IP address of the terminal belongs in the authoritative DNS server. The association relation may be shown as the following Table 1.

**Table 1:**

| Set of IP address segments | Domain name to be resolved | IP address of domain name to be resolved |
|---|---|---|
| set 1 | domain name A | IPa1 |
| | domain name B | IPb1 |
| | domain name C | IPc 1 |
| set 2 | domain name A | IPa2 |
| | domain name B | IPb2 |

As shown in Table 1, set 1 and set 2 are two sets of IP address segments stored in the recursive DNS server. The IP address segments in set 1 and set 2 are IP address segments of the terminal which have the same attributes. For domain name A, there is an association relation between set 1, domain name A, and IPal, and there is also an association relation between set 2, domain name A, and IPa2. The association relation as shown in Table 1 is assigned by the authoritative server corresponding to each domain name.

Alternatively, the recursive DNS server determines the IP address of the domain name to be resolved according to the pre-stored association relation, including: determining, by the recursive DNS server, the IP address segment to which the IP address of the terminal belongs in the association relation; and querying, by the recursive DNS server, the association relation according to the domain name to be resolved and the IP address segment, and determining, by the recursive DNS server, the IP address of the domain name to be resolved. Take the association relation shown in Table 1 as an example. Assuming that the IP address of terminal 1 is IPx, the recursive DNS server determines that the IP address segment to which IPx belongs is IPX, and further determines the set of IP address segments to which the IP address segment IPX belongs, assuming it is set 1. Hereafter, the recursive DNS server then determines that a resolution result corresponding to domain name A is IPa1 according to domain name A to be resolved.

Alternatively, in the association relation stored in the recursive DNS server, the IP address segments in the set of the IP address segments are B-type IP address segments. For example, the IP address of the terminal 1 is (1.1.1.1), then a B-type IP address segment corresponding to the IP address is (1.1.0.0/16), and a C-type IP address segment corresponding to the IP address is (1.1.1.0/24). The embodiments of the present disclosure perform caching by the B-type IP address segment, which may further reduce the memory space of the recursive DNS server occupied by the cached data. Besides, in the authoritative DNS server, the IP address segments in the set of IP address segments are also B-type IP address segments, and the recursive DNS server may directly obtain the association relation from the authoritative DNS server and store the association relation, thereby reducing additional processing to the set of IP address segments by the recursive DNS server.

In the DNS system, the recursive DNS server may receive resolution requests of multiple types of domain names. These domain names may be assigned with IP addresses by different authoritative DNS servers. Therefore, data transmission may exist between the recursive DNS server and multiple authoritative DNS servers, and association relations from multiple authoritative DNS servers may also be stored in the recursive DNS server. Alternatively, the recursive DNS server respectively stores the association relations according to the authoritative DNS servers. Before the recursive DNS server determines the IP address of the domain name to be resolved according to the pre-stored association relation, further including: determining, by the recursive DNS server, an identifier of the authoritative DNS server corresponding to the domain name to be resolved according to the domain name to be resolved; and obtaining, by the recursive DNS server, the association relation according to the identifier of the authoritative DNS server. When querying the cached association relation, the recursive DNS server first determines the identifier of the authoritative DNS server corresponding to the domain name to be resolved, and then determines the association relation from the authoritative DNS server through the identifier of the authoritative DNS server, which reduces the data quantity to be queried, thereby accelerating query efficiency of the recursive DNS server.

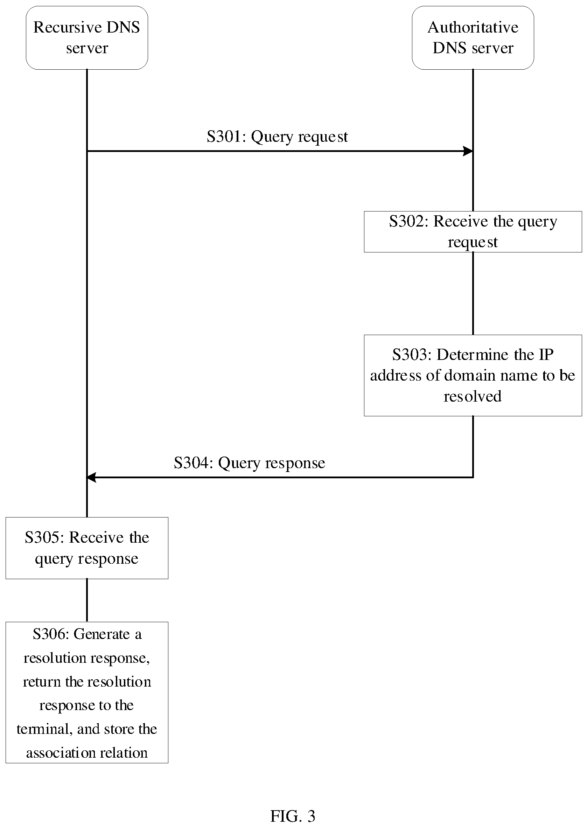

In step 203, the recursive DNS server generates a resolution response including the IP address of the domain name to be resolved, and returns the resolution response to the terminal, when the IP address of the domain name to be resolved exists in the recursive DNS server. Alternatively, the recursive DNS server may send a query request to the authoritative DNS server corresponding to the domain name to be resolved when the IP address of the domain name to be resolved does not exist in the recursive DNS server. Since the authoritative DNS server is a server that assigns the IP address to the domain name to be resolved, the authoritative DNS server may be able to determine the IP address of the domain name to be resolved. FIG. 3 is a schematic flowchart of a method for a feasible query interaction provided in embodiments of the present disclosure. The recursive DNS server may acquire an association relation from the authoritative DNS server through the method process shown in FIG. 3. As shown in FIG. 3, the method includes the following steps.

In step 301, the recursive DNS server sends a query request to the authoritative DNS server corresponding to a domain name to be resolved when an IP address of the domain name to be resolved does not exist in the recursive DNS server; where the query request includes the domain name to be resolved and an IP address of a terminal.

In step 302, the authoritative DNS server receives the query request.

In step 303, the authoritative DNS server determines the IP address of the domain name to be resolved according to the IP address of the terminal.

In step 304, the authoritative DNS server generates a query response according to the IP address of the domain name to be resolved, and returns the query response to the recursive DNS server; where the query response includes the IP address of the domain name to be resolved and a set of IP address segments corresponding to the IP address of the terminal.

In step 305, the recursive DNS server receives the query response sent by the authoritative DNS server.

In step 306, the recursive DNS server generates a resolution response including the IP address of the domain name to be resolved according to the query response, and returns the resolution response to the terminal; and the recursive DNS server stores the association relation between the domain name to be resolved, the IP address of the domain name to be resolved and the set of the IP address segments.

The recursive DNS server may first query locally after receiving the resolution request of the terminal. And step 301 is then implemented and the query request is sent to the authoritative DNS server if the IP address of the domain name to be resolved does not exist locally. In the embodiments of the present disclosure, the query request includes the domain name to be resolved and the IP address of the terminal. It should be understood that the IP address of the terminal may either be a specific form of the IP address of the terminal or an IP address segment to which the IP address of the terminal belongs. For example, the resolution request received by the recursive DNS server is from the terminal 1, and the IP address of the terminal 1 is (1.1.1.1), then the IP address of the terminal in the query request is either (1.1.1.1) or the B-type IP address segment (1.1.0.0/16).

In step 303, there are also multiple association relations similar to those shown in Table 1 in the authoritative DNS server. The difference is that the domain names in the association relations of the authoritative DNS server are the domain names to which IP addresses are assigned by the authoritative DNS server. The authoritative DNS server assigns different IP addresses to the same domain name when the same domain name corresponds to different sets of IP address segments, and IP addresses of the terminal belonging to the same set of IP address segments have the same attributes. The authoritative DNS server determines the set of IP address segments to which the IP address of the terminal belongs according to the IP address of the terminal after receiving the query request. Hereafter, the IP address that satisfies the association relation with the set of IP address segments and the domain name to be resolved is determined as the IP address of the domain name to be resolved according to the domain name to be resolved.

In step 304, the query response returned by the authoritative DNS server includes not only the IP address of the domain name to be resolved, but also the set of IP address segments corresponding to the IP address of the terminal in an additional block of the query response. For example, the IP address of the terminal 1 is (1.1.1.1), the domain name to be resolved is www.wangsu.com, and the IP address of the domain name to be resolved is IPm. In the authoritative server, the set of IP address segments to which the IP address of the terminal 1 belongs is {(1.1.0.0/16), (2.2.0.0/16)}, then the query response includes not only IPm, but also a set of the IP address segments {(1.1.0.0/16), (2.2.0.0/16)}.

In step 306, the recursive DNS server stores the association relation between the domain name to be resolved, the IP address of the domain name to be resolved and the set of the IP address segments. The terminal 1 in step 305 is still taken as an example, and the DNS server may store the association relation in the following manner. After receiving the query response, the recursive DNS server may query the association relation of the authoritative DNS server which has been locally cached in the recursive DNS server according to the identification information of the authoritative DNS server. Hereafter, if the set of IP address segments has been already stored, the recursive DNS server adds www.wangsu.com and IPm after the set of IP address segments according to the set of IP address segments {(1.1.0.0/16), (2.2.0.0/16)}. Or if the set of IP address segments has not been stored, the recursive DNS server adds the set of the IP address segments {(1.1.0.0/16), (2.2.0.0/16)} first, and then adds www.wangsu.com and IPm after the set of IP address segments, thereby storing the association relation between the set of IP address segments {(1.1.0.0/16), (2.2.0.0/16)}, www.wangsu.com and IPm.

Through the query interaction shown in FIG. 3, the recursive DNS server may obtain the association relation between the set of IP address segments to which the IP address of the terminal belongs, the domain name to be resolved, and the IP address of the domain name to be resolved at one time. By adopting this method, when the recursive DNS server receives a resolution request for a certain domain name to be resolved from a certain IP address in a certain set of IP address segments, the recursive DNS server may directly obtain the resolution result from the cache as long as the recursive DNS server used to respond to a resolution request for the domain name to be resolved from any IP address in the set of IP address segments, so that there is no need to access the authoritative server, thereby improving efficiency of resolution. For example, with reference to FIG. 1, after the DNS server sends once to the authoritative DNS server a query request including the IP address (1.1.1.1) of the terminal and the domain name to be resolved www.wangsu.com, the recursive DNS server may locally store the association relation between the set of IP address segments {(1.1.0.0/16), (2.2.0.0/16)}, www.wangsu.com and IPm according to a query response returned by the authoritative DNS server.

When the terminal 2 with an IP address of (1.1.2.2) sends the resolution request for www.wangsu.com to the recursive DNS server, the recursive DNS server determines that the B-type IP address segment to which the IP address (1.1.2.2) of the terminal 2 belongs is (1.1.0.0/16), thereby determining that a set of IP address segments corresponding to the IP address of the terminal 2 is {(1.1.0.0/16), (2.2.0.0/16)}, and further, it may be determined that the IP address of www.wangsu.com is IPm, and there is no need to send the query request to the authoritative DNS server again.

When the terminal 3 with an IP address of (2.2.2.2) sends the resolution request for www.wangsu.com to the recursive DNS server, the recursive DNS server determines that the B-type IP address segment to which the IP address (2.2.2.2) of the terminal 3 belongs is (2.2.0.0/16), thereby determining that a set of IP address segments corresponding to the IP address of the terminal 3 is {(1.1.0.0/16), (2.2.0.0/16)}, and further, it may be determined that the IP address of www.wangsu.com is IPm, and there is no need to send the query request to the authoritative DNS server again.

It is seen from the above specific examples of the terminal 1, terminal 2 and terminal 3 that in the method for resolving the domain name provided in the embodiments of the present disclosure, the association relation stored in the recursive DNS server is an association relation, in the authoritative DNS server corresponding to the domain name to be resolved,, between a set of IP address segments to which the IP address of the terminal belongs, the domain name to be resolved, and the IP address of the domain name to be resolved. In the authoritative DNS server, IP addresses in the same set of IP address segments correspond to the same association relation. Therefore, the recursive DNS server may reduce times for accessing the authoritative DNS server by caching the association relation between the set of IP address segments, the domain name to be resolved and the IP address of the domain name to be resolved, thereby improving efficiency of domain name resolution.

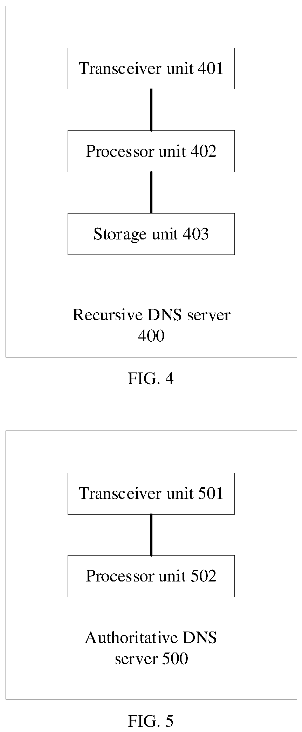

Based on the same technical conception, embodiments of the present disclosure further provide a recursive DNS server, and the recursive DNS server may implement the method for resolving the domain name provided in any of the embodiments described above. FIG. 4 is a schematic structure of the recursive DNS server provided in the embodiments of the present disclosure. As shown in FIG. 4, the recursive DNS server 400 includes a transceiver unit 401, a processer unit 402 and a storage unit 403. Herein:

The transceiver unit 401 is configured to receive a resolution request sent by a terminal; where the resolution request includes a domain name to be resolved and an IP address of the terminal.

The processer unit 402 is configured to determine the IP address of the domain name to be resolved according to a pre-stored association relation in a storage unit 403. The association relation is an association relation, obtained by the recursive DNS server from an authoritative DNS server corresponding to the domain name to be resolved, between a set of IP address segments to which the IP address of the terminal belongs in the authoritative DNS server, the domain name to be resolved, and the IP address of the domain name to be resolved.

The processer unit 402 is further configured to generate a resolution response including the IP address of the domain name to be resolved, and return the resolution response to the terminal through the transceiver unit 401, when the IP address of the domain name to be resolved exists in the storage unit 403.

Alternatively, the processer unit 402 is further configured to:
send a query request to the authoritative DNS server corresponding to the domain name to be resolved through the transceiver unit 401 when the IP address of the domain name to be resolved does not exist in the storage unit 403; where the query request includes the domain name to be resolved and the IP address of the terminal.

The transceiver unit 401 is further configured to:
receive a query response sent by the authoritative DNS server, and the query response includes the IP address of the domain name to be resolved and the set of the IP address segments to which the IP address of the terminal belongs in the authoritative DNS server.

The processor unit 402 is further configured to:
generate the resolution response including the IP address of the domain name to be resolved according to the query response, return the resolution response to the terminal through the transceiver unit 401, and control the storage unit 403 to store the association relation between the domain name to be resolved, the IP address of the domain name to be resolved and the set of the IP address segments.

Alternatively, the processor unit 402 is further configured to:
determine an identifier of the authoritative DNS server corresponding to the domain name to be resolved according to the domain name to be resolved; and
obtain the association relation according to the identifier of the authoritative DNS server.

Alternatively, the processor unit 402 is configured to:
determine an IP address segment to which the IP address of the terminal belongs in the association relation; and
query the association relation according to the domain name to be resolved and the IP address segment, and determine the IP address of the domain name to be resolved.

Alternatively, the IP address segments in the set of the IP address segments are B-type IP address segments.

Based on the same technical conception, embodiments of the present disclosure further provide an authoritative DNS server, and the authoritative DNS server may implement the method for resolving the domain name provided in any of the embodiments described above. FIG. 5 is a schematic structure of the authoritative DNS server provided in the embodiments of the present disclosure. As shown in FIG. 5, the authoritative DNS server 500 includes a transceiver unit 501 and a processer unit 501. Herein:

The transceiver unit 501 is configured to receive a query request sent by a recursive DNS server; where the query request includes a domain name to be resolved and an IP address of a terminal.

The processor unit 502 is configured to determine the IP address of the domain name to be resolved according to the IP address of the terminal.

The processor unit 502 is further configured to generate a query response according to the IP address of the domain name to be resolved, and return the query response to the recursive DNS server through the transceiver unit 501; where the query response includes the IP address of the domain name to be resolved and a set of IP address segments corresponding to the IP address of the terminal.

It should be understood that the division of the above respective units is only a division of logical functions. In practice, all or some of the units may be integrated into one physical entity or may be physically separated. In the embodiments of the present disclosure, the transceiver unit may be implemented by a transceiver, the processor unit may be implemented by a processor, and the storage unit may be implemented by a memory.

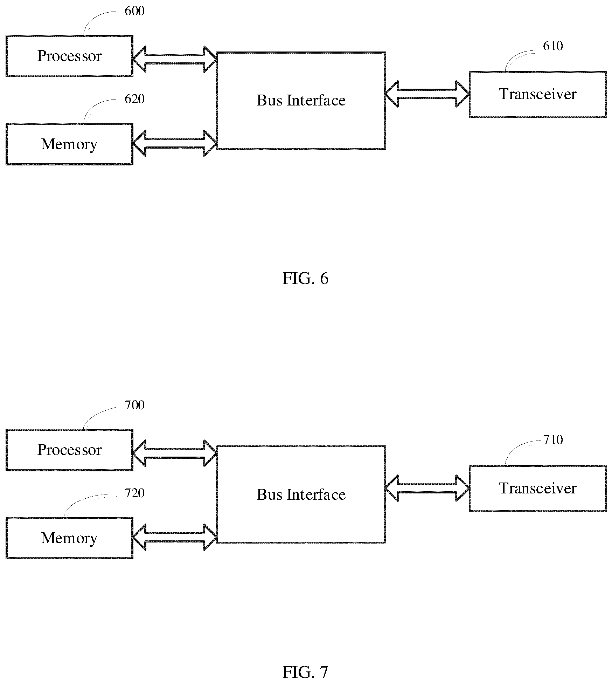

Based on the same technical conception, embodiments of the present disclosure provide a computing device. FIG. 6 is a schematic structure of the computing device provided in the embodiments of the present disclosure. As shown in FIG. 6, the computing device corresponds to the recursive DNS server in any of the embodiments described above. The computer device in FIG. 6 includes a processor 600 configured to read programs in a memory 620 to implement the following processes:
receiving through a transceiver 610 a resolution request sent by a terminal; where the resolution request includes a domain name to be resolved and an IP address of the terminal;
determining the IP address of the domain name to be resolved according to a pre-stored association relation in a memory 620; where the association relation is an association relation, obtained by the recursive DNS server from an authoritative DNS server corresponding to the domain name to be resolved, between a set of IP address segments to which the IP address of the terminal belongs in the authoritative DNS server, the domain name to be resolved, and the IP address of the domain name to be resolved; and
generating a resolution response including the IP address of the domain name to be resolved, and returning the resolution response to the terminal through a transceiver 610, when the IP address of the domain name to be resolved exists in the memory 620.

Alternatively, the processor 600 is further configured to:
send a query request to the authoritative DNS server corresponding to the domain name to be resolved through the transceiver 610 when the IP address of the domain name to be resolved does not exist in the memory 620; where the query request includes the domain name to be resolved and the IP address of the terminal.

The transceiver 610 is further configured to:
receive a query response sent by the authoritative DNS server, and the query response includes the IP address of the domain name to be resolved and the set of the IP address segments to which the IP address of the terminal belongs in the authoritative DNS server.

The processor 600 is further configured to:
generate a resolution response including the IP address of the domain name to be resolved according to the query response, return the resolution response to the terminal through the transceiver unit 610, and control the memory 620 to store the association relation between the domain name to be resolved, the IP address of the domain name to be resolved and the set of the IP address segments.

Alternatively, the processor 600 is further configured to:
determine an identifier of the authoritative DNS server corresponding to the domain name to be resolved according to the domain name to be resolved; and
obtain the association relation according to the identifier of the authoritative DNS server.

Alternatively, the processor 600 is configured to:
determine an IP address segment to which the IP address of the terminal belongs in the association relation; and
query the association relation according to the domain name to be resolved and the IP address segment, and determine the IP address of the domain name to be resolved.

Alternatively, the IP address segments in the set of the IP address segments are B-type IP address segments.

Herein, in FIG. 6, a bus interface may include a random number of interconnecting buses and bridges which, specifically, are linked together via various circuits of one or more processors represented by the processor 600 and a memory represented by a memory 620. The bus interface may further link various other circuits such as a peripheral device, a regulator and a power management circuit together, which are known in the art, and therefore, is not further described herein. The bus interface provides an interface. The transceiver 610 may be a plurality of elements, i.e., including a transmitter and a receiver, and providing a unit configured to communicate with various other devices over a transmission medium. The processor 600 is responsible for managing the bus interface and general processing, and the memory 620 may store data used by the processor 600 when performing operations.

Alternatively, the processor 600 may be central processing unit (CPU), an application specific integrated circuit (ASIC), a field-programmable gate array (EPGA) or a complex programmable logic device (CPLD).

Based on the same technical conception, embodiments of the present disclosure provide another computing device. FIG. 7 is a schematic structure of the computing device provided in the embodiments of the present disclosure. As shown in FIG. 7, the computing device corresponds to the second device in any of the embodiments described above. The computing device in FIG. 7 includes a processor 700 configured to read programs in a memory 720 to implement the following processes:
receiving a query request sent by a recursive DNS server through a transceiver 710; where the query request includes a domain name to be resolved and an IP address of a terminal.
determining the IP address of the domain name to be resolved according to the IP address of the terminal; and
generating a query response according to the IP address of the domain name to be resolved, and returning the query response to the recursive DNS server through the transceiver 710; where the query response includes the IP address of the domain name to be resolved and a set of IP address segments corresponding to the IP address of the terminal.

Based on the same technical conception, embodiments of the present disclosure further provide a non-volatile computer readable storage medium, and the non-volatile computer readable storage medium stores a computer executable instruction which is configured to enable a computing device to perform the method for resolving the domain in any of the embodiments of the present disclosure described above.

The non-volatile computer readable storage medium may be any usable medium or data storage device that is accessible by the computer, including but not limited to a magnetic memory (for example, a floppy disk, a hard disk, a magnetic tape, a magneto-optical (MO) disk and the like), an optical memory (for example, CD, DVD, BD, HVD and the like), and a semiconductor memory (for example, ROM, EPROM, FEPROM, a non-volatile memory (NAND FLASH) and a solid-state hard disk (SSD)) and so on.

Based on the same technical conception, embodiments of the present disclosure further provide a DNS system, and the DNS system includes the recursive DNS server provided in any of the embodiments described above, and/or the authoritative DNS server provided in any of the embodiments described above. The DNS system may be configured to perform the method for resolving the domain name provided in any of the embodiments described above.

Although the preferred embodiments of the present application have been described, those skilled in the art may make other changes and modifications to these embodiments once they know the basic inventive concepts. Therefore, the appended claims are intended to be construed to include the preferred embodiments and all changes and modifications that fall within the scope of the present disclosure. Obviously, those skilled in the art may make various modifications and variations to the present disclosure without departing from the spirit and scope of the present disclosure. In this way, the present disclosure also intends to include these modifications and variations if these modifications and variations of the present disclosure fall within the scope of the claims of the present disclosure and their equivalent technologies.

## Claims

1. A method for resolving a domain name, comprising:
receiving, by a recursive domain name system DNS server, a resolution request sent by a terminal; wherein the resolution request comprises a domain name to be resolved and an Internet protocol IP address of the terminal;
determining, by the recursive DNS server, the IP address of the domain name to be resolved according to a pre-stored association relation; wherein the association relation is an association relation between a set of IP address segments , the domain name to be resolved, and the IP address of the domain name to be resolved; wherein the association relation is obtained by the recursive DNS server from an authoritative DNS server corresponding to the domain name to be resolved, and the set of IP address segments is a set of IP address segments to which the IP address of the terminal belongs in the authoritative DNS server; and
generating, by the recursive DNS server, a resolution response comprising the IP address of the domain name to be resolved, and returning, by the recursive DNS server, the resolution response to the terminal, when the IP address of the domain name to be resolved exists in the recursive DNS server.

2. The method according to claim 1, comprising:
sending, by the recursive DNS server, a query request to the authoritative DNS server corresponding to the domain name to be resolved when the IP address of the domain name to be resolved does not exist in the recursive DNS server; where the query request comprises the domain name to be resolved and the IP address of the terminal;
receiving, by the recursive DNS server, a query response sent by the authoritative DNS server, and the query response comprises the IP address of the domain name to be resolved and the set of the IP address segments to which the IP address of the terminal belongs in the authoritative DNS server; and
generating, by the recursive DNS server, the resolution response comprising the IP address of the domain name to be resolved according to the query response, returning, by the recursive DNS server, the resolution response to the terminal, and storing, by the recursive DNS server, the association relation between the domain name to be resolved, the IP address of the domain name to be resolved and the set of the IP address segments.

3. The method according to claim 1, before the recursive DNS server determines the IP address of the domain name to be resolved according to the pre-stored association relation, further comprising:
determining, by the recursive DNS server, an identifier of the authoritative DNS server corresponding to the domain name to be resolved according to the domain name to be resolved; and
obtaining, by the recursive DNS server, the association relation according to the identifier of the authoritative DNS server.

4. The method according to claim 1, wherein the recursive DNS server determines the IP address of the domain name to be resolved according to the pre-stored association relation comprises:
determining, by the recursive DNS server, an IP address segment to which the IP address of the terminal belongs in the association relation; and
querying, by the recursive DNS server, the association relation according to the domain name to be resolved and the IP address segment, and determining, by the recursive DNS server, the IP address of the domain name to be resolved.

5. The method according to claim 1, wherein the IP address segments in the set of IP address segments are B-type IP address segments.

6. A method for resolving a domain name, comprising:
receiving, by an authoritative DNS server, a query request sent by a recursive DNS server; wherein the query request comprises a domain name to be resolved and an Internet protocol IP address of a terminal;
determining, by the authoritative DNS server, the IP address of the domain name to be resolved according to the IP address of the terminal; and
generating, by the authoritative DNS server, a query response according to the IP address of the domain name to be resolved, and returning, by the authoritative DNS server, the query response to the recursive DNS server; wherein the query response comprises the IP address of the domain name to be resolved and a set of IP address segments corresponding to the IP address of the terminal.

7. A recursive DNS server, comprising:
a transceiver unit, configured to receive a resolution request sent by a terminal; wherein the resolution request comprises a domain name to be resolved and an Internet protocol IP address of the terminal; and
a processer unit, configured to determine the IP address of the domain name to be resolved according to a pre-stored association relation in a storage unit; wherein the association relation is an association relation between a set of IP address segments, the domain name to be resolved, and the IP address of the domain name to be resolved; wherein the association relation is obtained by the recursive DNS server from an authoritative DNS server corresponding to the domain name to be resolved, and the set of IP address segments is a set of IP address segments to which the IP address of the terminal belongs in the authoritative DNS server;
wherein the processer unit is further configured to generate a resolution response comprising the IP address of the domain name to be resolved, and return the resolution response to the terminal through the transceiver unit, when the IP address of the domain name to be resolved exists in the storage unit.

8. The recursive DNS server according to claim 7, wherein the processer unit is further configured to:
send a query request to the authoritative DNS server corresponding to the domain name to be resolved through the transceiver unit when the IP address of the domain name to be resolved does not exist in the storage unit; wherein the query request comprises the domain name to be resolved and the IP address of the terminal;
the transceiver unit is further configured to:
receive a query response sent by the authoritative DNS server, and the query response comprises the IP address of the domain name to be resolved and the set of the IP address segments to which the IP address of the terminal belongs in the authoritative DNS server; and
the processor unit is further configured to:
generate the resolution response comprising the IP address of the domain name to be resolved according to the query response, return the resolution response to the terminal through the transceiver unit, and control the storage unit to store the association relation between the domain name to be resolved, the IP address of the domain name to be resolved and the set of the IP address segments.

9. The recursive DNS server according to claim 7, wherein the processor unit is further configured to:
determine an identifier of the authoritative DNS server corresponding to the domain name to be resolved according to the domain name to be resolved; and
obtain the association relation according to the identifier of the authoritative DNS server.

10. The recursive DNS server according to claim 7, wherein the processor unit is particularly configured to:
determine an IP address segment to which the IP address of the terminal belongs in the association relation; and
query the association relation according to the domain name to be resolved and the IP address segment, and determine the IP address of the domain name to be resolved.

11. The recursive DNS server according to claim 7, wherein the IP address segments in the set of the IP address segments are B-type IP address segments.

12. An authoritative DNS server, comprising:
a transceiver unit, configured to receive a query request sent by a recursive DNS server; wherein the query request comprises a domain name to be resolved and an IP address of a terminal; and
a processor unit, configured to determine the IP address of the domain name to be resolved according to the IP address of the terminal;
wherein the processor unit is further configured to generate a query response according to the IP address of the domain name to be resolved, and return the query response to the recursive DNS server through the transceiver unit; wherein the query response comprises the IP address of the domain name to be resolved and a set of IP address segments corresponding to the IP address of the terminal.

13. A computer readable storage medium, storing a computer executable instruction, wherein the computer executable instruction is configured to enable the computer to execute the method according to any one of claims 1 to 6.

14. A computing device, comprising:
a memory, configured to store a program instruction; and
a processor, configured to call the program instruction stored in the memory to execute the method according to any one of claims 1 to 6 in accordance with an program that is obtained.

15. A DNS system, comprising the recursive DNS server according to any one of claims 7 to 11, and/or the authoritative DNS server according to claim 12.
